# EUROPEAN PATENT APPLICATION

(11) **EP 0 730 367 A1**
(43) Date of publication of application: **04.09.1996**
(21) Application number: 96300976.6
(22) Date of filing: 13.02.1996
(51) Int. Cl.: H04N 1/191

(54) **Method and system for interlaced printing**

(30) Priority: 01.03.1995 US 396852; 31.03.1995 US 415228
(71) Applicant: Hewlett-Packard Company, Palo Alto, California 94304 (US)
(72) Inventor: Hickman, Mark S., Vancouver, WA 98684 (US)
(74) Representative: Colgan, Stephen James

(57) **Abstract**

A two-pass printing method and related printing system are disclosed. In the first pass a checkerboard pattern of 3 X 3 dot clusters are printed. After the first pass, the print medium (38) is advanced and a different group of nozzles is used to print a second pass over the same swath also using 3 X 3 dot clusters in a checkerboard pattern, which dot clusters fill in the interstitial positions left during the first pass. In this manner, all print positions are addressed by the print mode. Image data (46) received from the driver is typically segmented into square halftone cells having eight pixels per side or a multiple of eight pixels per side. The 3 X 3 dot cluster print mode provides a print mask pattern dot width that is not an integer divisor of the typical dither cell dot widths. The disclosed printing method ensures that different nozzles will be used for any pixel location in the repeating dither cells. Thus if any single nozzle is defective, the other functioning nozzle will in part hide the defect.

## Description

### CROSS REFERENCE TO RELATED APPLICATION

This is a continuation-in-part of the following co-pending patent application: ODD NUMBER OF PASSES, ODD NUMBER OF ADVANCES, AND SEPARATED-DIAGONAL-LINE MASKING, IN LIQUID INK PRINTERS, serial number 08/057,576, filed April 4, 1993 (Brent W. Richtsmeier, et al.).

### BACKGROUND OF THE INVENTION

### Field of the Invention

The present invention relates to scanning dot printers, and particularly to a print method and system providing improved print quality.

### Statement of the Relevant Art

Dot matrix printing is the general term for printing techniques in which the pattern or matrix of dots are printed on a medium, such as paper, to produce the desired image or text. If the dots are sufficiently small and closely spaced, the pattern is perceived by the human eye as if the dots form a continuous image. Dots ofthe three primary additive colors, cyan, magenta and yellow, may be combined, either side-by-side or dot-on-dot, to create the visual perception of a wide range of colors.

A popular type of dot matrix printer is the ink-jet printer. The printhead of an ink-jet printer typically contains an array of miniature firing chambers that expel droplets of ink onto the print media. Ink-jet printers commonly use a scanning printhead. The printer scans the printhead back and forth across the page as the firing chambers are energized. After the printhead is scanned across the page, the paper or other print medium is incrementally advanced in a direction orthogonal to the scanning axis to position the medium for a subsequent scan. The printhead may be scanned one or more times between each incremental medium advance. If the printer is printing in color, the color droplets may be deposited in the same or in different passes. The passes of the printhead combine to create a contiguous series of horizontal swaths, which taken together, create the overall image desired to be printed.

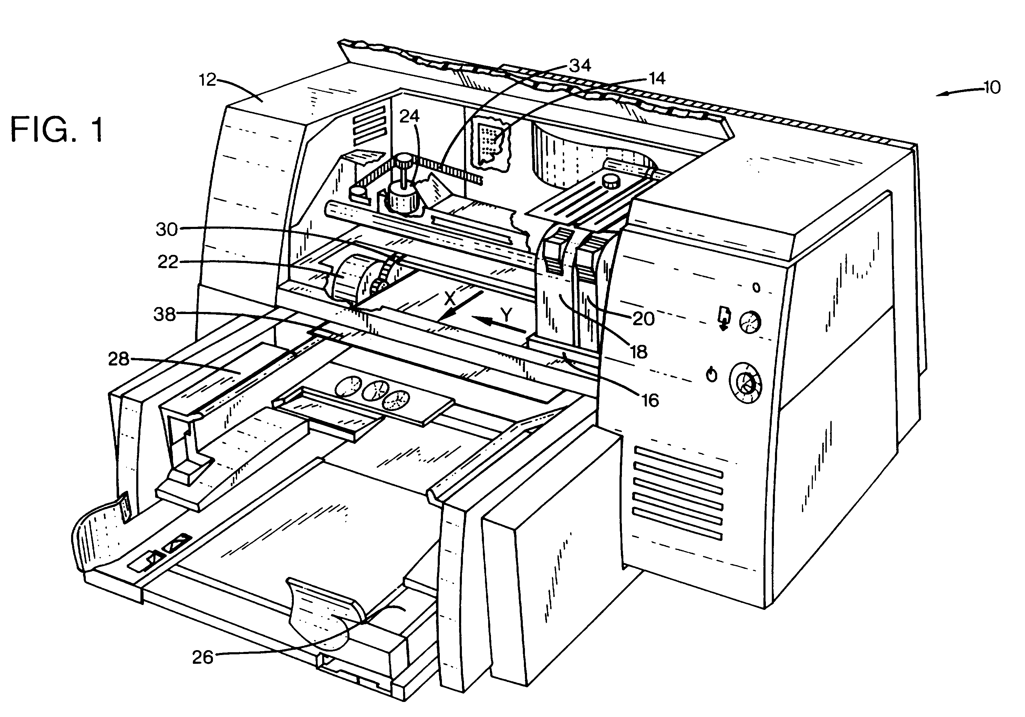

The resolution of ink-jet printers is measured in terms of the number of dots that can be printed per linear inch. Resolutions of 300 or 600 dots per inch (DPI) are typical. The spacing between dots would therefore be 1/300 or 1/600 inch, respectively. This distance between adjacent dot centers provides a convenient measuring system for distances either on the page or on the printhead, and may be referred to as the "dot row" distance. Modern ink-jet printheads may have numerous nozzles for each color. For example, the printer shown in Fig. 1 has a black printhead with 300 nozzles operating at 600 DPI and a tri-color printhead with 64 nozzles per color (192 total nozzles) operating at 300 DPI.

Print quality in ink-jet printing can be degraded because of various factors. Certain problems relate to the nature of liquid ink and/or how it may react with the print medium. For example, if too much ink is laid down on the page too quickly, particularly if a non-porous print medium is used, the ink can pool together, causing dots to migrate from their intended locations. If the print medium is paper, ink can also wick into the paper fibers and spread into unintended regions. If inks of different colors are laid down next to each other on the same scan of the pen, ink of one color can bleed into the other color. Also, if too much ink is placed on the page, the moisture content of the ink can cause the paper to cockle.

Other print quality defects result from problems with the printhead. For example, air bubbles or debris in the nozzles can cause the nozzles to fail to eject droplets. Since a given nozzle typically prints an entire row of dots on the print medium, a defective nozzle can produce a thin white horizontal line in an area of otherwise solid color. A similar problem can occur if a nozzle has a trajectory error, which means that instead of ejecting the ink droplet directly normal to the printhead, the droplet is ejected at some angle. If the trajectory error is in the scan axis, the defective nozzle can print dots either ahead of or behind its correct position. If the error is in the medium-advance axis, the nozzle can print in the path of a vertically adjacent nozzle, thus effectively eliminating any contribution of the defective nozzle in its intended nozzle row.

Errors in the mechanical assemblies used to advance the print medium and scan the printhead back and forth across the page may also cause print quality degradation. A defect known as "banding" can occur because of errors in the distance the medium is advanced. If the medium advance is less than the nominal swath height, a narrow darker band of ink will occur in the small region where the two swaths overlap. If the medium advance is slightly more than ideal, a narrow white band will occur.

Various methods and systems have been implemented to eliminate or at least hide such defects caused by the printhead or printing mechanism. U.S. Patent No. 4,963,882 (Hickman), assigned to the present assignee, discloses a method that alleviates errors due to defective or non-functioning nozzles. In the Hickman method, each dot row is addressed at least twice, each time by a different nozzle. If any given nozzle is defective, another nozzle will always address that same row. This technique is referred to as a "redundant nozzle" print mode.

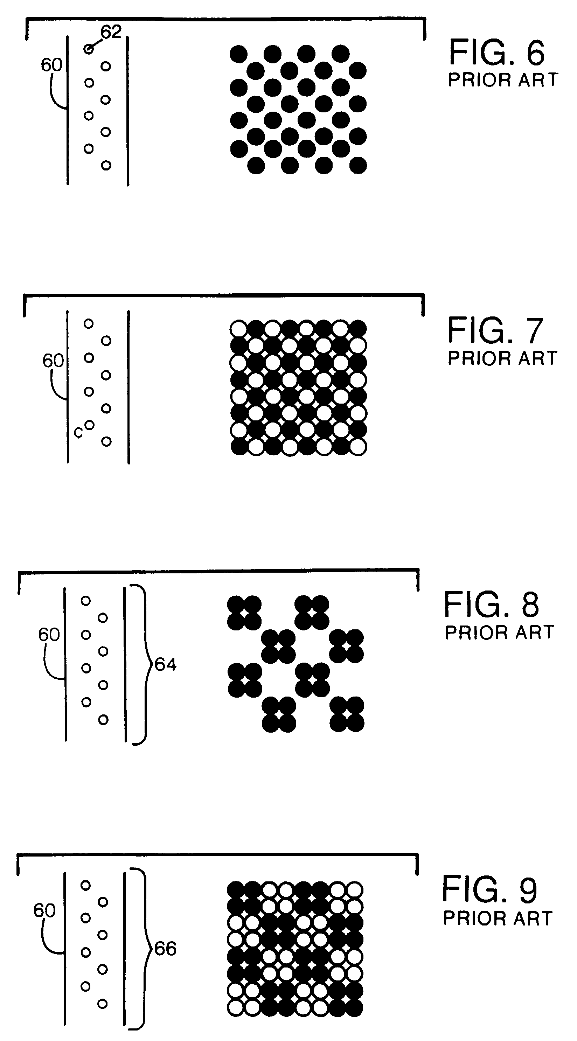

U.S. Patent No. 4,748,453 (Lin et al.) discloses a two-pass method for reducing or eliminating pooling ofink droplets when printing on overhead transparencies or other nonabsorbent material. In the first pass, the printhead lays down a checkerboard of alternating dots, with adjacent diagonal dots being contiguous. On the second pass, a complementary checkerboard pattern of alternating dots are laid down in the interstitial positions between the dots of the first pass (See Figs. 6 and 7). It is intended that dots laid down on the first pass will have time to dry before the dots are deposited on the second pass.

U.S. Patent No. 4,967,203 (Doan et al.), assigned to the present assignee, also discloses a two-pass print mode. In the first pass a checkerboard pattern of 2 X 2 dot clusters is printed. After the first pass, the paper is advanced a portion of the effective printhead height. A second pass is then made with a different set of nozzles to print a second checkerboard pattern of 2 X 2 dot clusters, complementary in position and interleaved with the first pattern (See Figs. 8 and 9). Successive passes of the printhead are made, with partial swath height advances of the print medium between passes, to complete the intended image. The two complementary patterns are thus "interleaved" or "shingled" between print swaths similar to the way shingles on a roof are laid down. This shingling effect alleviates banding artifacts.

A problem, however, with complementary patterns in multi-pass printing, such as disclosed in Lin and Doan, is that misalignment between passes can result in reductions in effective coverage of the intended print zone. The misalignment can occur in either the medium-advance or the scan axis. For example, in the single dot checkerboard pattern disclosed in Lin, if the medium-advance error is a single dot row in either the scanning or medium-advance direction, the pattern in the second pass will be laid directly on top of the pattern in the first pass, which will effectively mean that half of the intended area will not be covered with dots. The same medium-advance error in the Doan print mode would result in a reduction of one-fourth of the intended area fill.

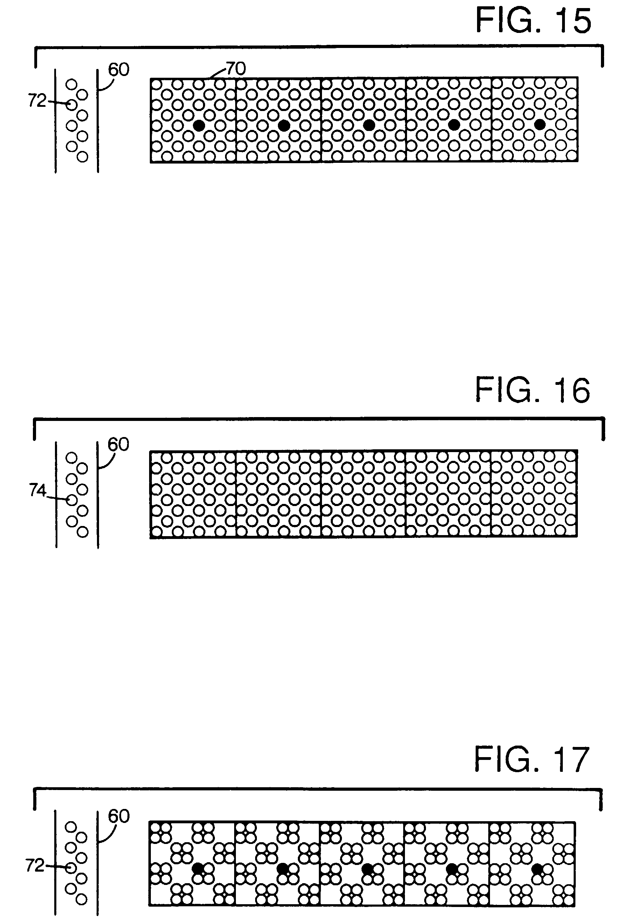

Another print defect that has been discovered by the present inventors is one in which the pattern dot width of the print mode "beats" with the dot width of halftone or dither cell produced by the printer driver. Dithering techniques produce a "cell" of a particular number of pixels. Many classic dither patterns use square cells having 8 pixels per side, or 64 total pixels per cell. Other dither cells have other multiples of 8 pixels per side, such as 16, 64, or 128 pixels. If a print mode pattern repeats on the same dot frequency (i.e., same number of dots per repetitive cycle) as the dither cell, the print mode pattern can beat with the frequency of the dither cell, causing undesirable print artifacts (See Figs. 15-20).

There remains a need for a printing method and system that minimizes print defects due to problems such as non-functioning nozzles, nozzle trajectory error, and mechanical errors in either the printhead scan axis or the medium-advance axis. A multi-pass method solving these problems would also preferably avoid problems relating to the print mode frequency beating with the dither cell frequency.

### SUMMARY OF THE INVENTION

The invention provides a method of printing on a print medium with a printhead according to image data that has been segmented into data cells having a preselected cell dot width. This method includes the steps of: (a) depositing dots onto the medium in a first pass of the printhead according to the image data in a first pattern of dot clusters; (b) advancing the print medium with respect to the printhead; and (c) depositing dots onto the medium in a second pass of the printhead according to the image data in a second pattern of dot clusters interleaved with and complementary in position to the first pattern. In one embodiment, the pattern dot width and the cell dot width are not integer factors of each other. In another embodiment, the first and second patterns have a pattern dot width that is not an integer divisor of the cell dot width.

In an alternative embodiment, the invention provides a method of printing on a print medium with a scanning ink-jet printhead having an effective printhead height. This method includes the steps of: (a) depositing a first checkerboard pattern of 3 X 3 dot clusters according to the image data in a first pass of the printhead across the medium; (b) advancing the print medium a portion of the effective printhead height; and (c) depositing a second checkerboard pattern of 3 X 3 dot clusters according to the image data in a second pass of the printhead across the medium. The second checkerboard pattern is interleaved with and complementary in position to the first checkerboard pattern.

The invention also provides a printing system that prints on a print medium based on image data that has been halftoned into data cells of a preselected cell dot width. This system includes a controller communicatively linked to receive the halftoned image data. A medium-advance assembly, a carriage scanning assembly, and a printhead are communicatively linked to the controller. The controller is programmed to actuate the medium advance assembly, carriage scanning assembly and printhead to perform the methods defined above.

A printing method and system are thus provided that minimize print quality degradation arising from defects such as non-functioning nozzles, nozzle trajectory error, and mechanical errors in the scanning axis or the medium-advance axis. These problems are solved without the introduction of undesirable defects resulting from the print mode frequency beating with the dither cell frequency.

### BRIEF DESCRIPTION OF THE DRAWINGS

Fig. 1 is a perspective, partial cut-away, view of a printer of the invention.

Fig. 2 is a block schematic diagram of a printing system of the invention.

Fig. 3 illustrates a 8 X 8 pixel dither cell.

Fig. 4 illustrates an 8 X 8 pixel section of a rasterized image.

Fig. 5 illustrates the result of tiling the dither cell of Fig. 3 over the section of rasterized image of Fig. 4.

Figs. 6 and 7 illustrate a previously invented two-pass checkerboard printing method.

Figs. 8 and 9 illustrate a previously invented two-pass 2 X 2 dot cluster checkerboard printing method.

Figs. 10 and 11 illustrate a two-pass three dot cluster print mode of the invention.

Fig. 12 illustrates the resulting pattern of dots of the print mode of Figs. 6 and 7 with a one dot row alignment error between passes in the medium-advance or scan direction.

Fig. 13 illustrates the resulting dot pattern of the print mode of Figs. 8 and 9 with a one dot row alignment error between passes in the medium-advance direction.

Fig. 14 illustrates the resulting dot pattern of the print mode of Figs. 10 and 11 with a one dot row alignment error between passes in the medium-advance direction.

Figs. 15 and 16 illustrate print defects arising from the print mode pattern of Figs. 6 and 7 beating with the 8 X 8 dither cell of Fig. 3.

Figs. 17 and 18 illustrate print defects arising from the print mode pattern of Figs. 8 and 9 beating with the 8 X 8 dither cell of Fig. 3.

Figs. 19 and 20 illustrate beneficial effects of the print mode pattern of Figs. 10 and 11 that do not beat with the 8 X 8 dither cell of Fig. 3.

### DETAILED DESCRIPTION OF THE ILLUSTRATED EMBODIMENT

Fig. 1 illustrates an ink-jet printer, generally indicated at 10, of the invention. Printer 10 includes a housing 12 in which are mounted a controller 14, a print cartridge carriage 16 (which receives print cartridges 18 and 20), medium advance motor 22, and carriage drive motor 24. Also attached to housing 12 are a paper input tray 26 and a paper output tray 28. Controller 14 is communicatively connected to a host printing device (not shown), such as a personal computer from which it receives data signals representative of the image and/or text desired to be printed. Controller 14 is also communicatively connected with printheads 18 and 20, medium-advance motor 22, and carriage advance motor 24. Medium-advance motor 22 is linked via a gearing assembly 30 to polymeric rollers (not shown) that drive the print medium through the printer. Carriage advance motor 24 is linked via a drive belt 34 to carriage 16. A stack of paper is placed in the input tray 26. Sheet of paper 38 is shown being printed on.

At the appropriate time, controller 14 actuates carriage advance motor 24 to drive carriage 26 in the carriage advance axis Y to scan printheads 18 and 20 over the current swath on sheet 38. As print cartridges 18 and 20 containing printheads (not shown) are scanned in the Y direction, the printheads are addressed by controller 14 to expel droplets of ink in the desired dot matrix pattern across sheet 38. After a scan is complete, controller 14 sends a signal to medium-advance motor 22 to drive sheet 38 incrementally in the medium-advance direction X shown so that the printheads can begin another pass. Multiple adjacent horizontal passes are printed in this manner to complete the printing of the desired image on the page. More than one pass can also be made over the same section without advancing the paper.

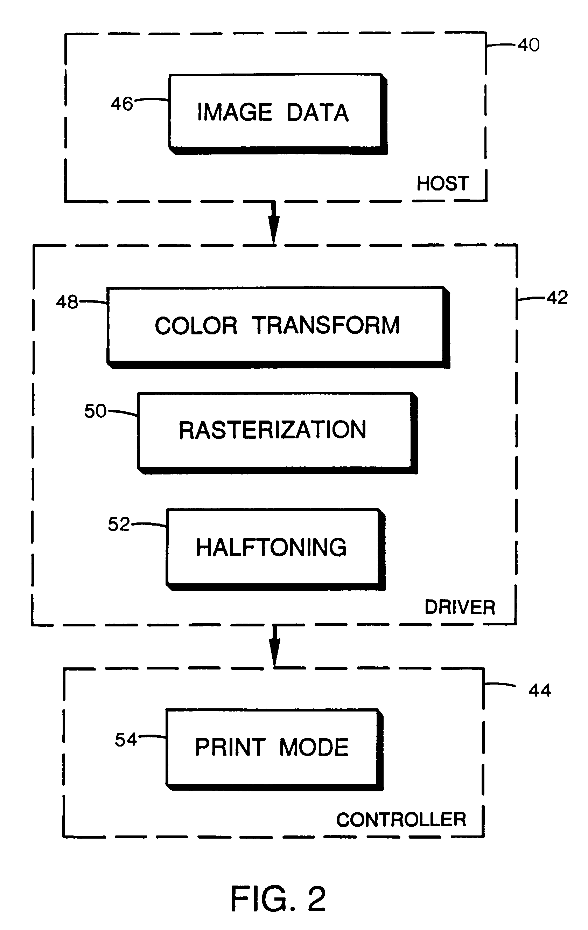

Fig. 2 schematically illustrates a printing system of the invention. This printing system includes three main components, a host 40, a driver 42 and a controller 44. Host 40 is typically a computing device such as a personal computer. Host 40 typically includes an input mechanism such as a keyboard and/or mouse and a video output such as a computer monitor. Held within the memory of the host 40 is the image data 46 which is desired to be printed. This image data may include text and or graphics created by a user and/or images derived from some other source, such as a scanner, photo CD camera, or video recorder. This image data may be stored in any of various formats or computer graphics languages, which may be independent of the resolution of any particular computer monitor or printing device.

This image data may be monochrome or multicolor information. Multicolor images are typically stored in a red (R), green (G), blue (B) additive color format. Additive primary colors RGB are used when the colors are produced from a light into the eye of the observer. RGB added together make white light; whereas the absence of RGB (the absence of light) results in black (K). For each pixel in the raster, a particular color intensity is provided. Images brought in from sources such as scanners also are typically in RGB, since the photoreceptors in scanners receive the colors from the image in this manner. CRT's are essentially capable of an infinite number of intensity levels per phosphor. However, the human eye can only resolve about 50 levels of intensity. The color image held within a computer is typically stored with 256 levels of intensity. 256 different levels of intensity can be represented using 8 bits of information (2⁸ = 256) per pixel.

The image is logically represented in terms of three separate logical image matrices or rasters, one for each color. For each raster, a particular intensity for each pixel is stored. Each color raster is referred to as a color "plane." The three color planes combine to provide a color "space." Images stored in RGB format are said to be in RGB color space.

The driver 42 is typically in the form of software entered into the memory of the host 40. In many cases, driver 42 is designed for a specific printer. Many popular printers come with a floppy disk containing such a driver, which the user loads into his host computer. Within the driver, there are three fundamental functional steps, color transform 48, rasterization 50, and halftoning 52.

During color transform 48, the RGB image information is converted to the subtractive colors cyan (C), magenta (M), and yellow (Y). Subtractive primary colors CYM are used because color images seen on a sheet of paper or other print medium are the colors that remain after light is reflected through the ink or other colorant onto the page and back into the viewers eye. The addition of all three subtractive CYM primary produces black (K), and the absence of any of these subtractive primaries produces white. The following algebraic manipulations in Table 1 can be used to transform additive RGB color information into subtractive CYM color information.

**Table 1**

| | |
|---|---|
| R+G=Y | C+M=B |
| R+B=M | C+Y=G |
| G+B=C | M+Y=R |
| R+G+B=white | C+M+Y=K |
| none=K | none=white |

Color printers having cyan, magenta and yellow ink also often have a printhead for printing black ink. A procedure called "undercolor removal" can be used in a region of color printing to print some black dots and remove some of the color dots. This is true because a combination of all three additive colors produces black, and in an area in which all three colors are used, a black dot would therefore replace three dots of each of the three primaries. When undercolor removal is used, the additive RGB color space is converted to subtractive CYMK four color space.

During rasterization 50, the image data is converted over to a rasterized format consistent with the resolution of the printer involved. For example, if the resolution is 300 DPI, the image received from the host 40 is rasterized to 300 DPI. This rasterization process must often transform the image resolution received from the host to the resolution of the printing device. For example, typical resolution of computer monitors is approximately 72 DPI. Therefore, to transform this image to 300 DPI, the resolution of the image must be approximately quadrupled. During rasterization a logical raster image for each color is created for each pixel, with the intensity level for that pixel.

Ink-jet printers are commonly binary in nature. In other words, they can only print two levels for each color: on or off. On the other hand, the image data 46 exists in terms of multiple intensity levels per pixel per color, and may be considered virtually analog. Therefore, some method must be provided to transform the essentially analog pixel information to binary pixel information. This conversion algorithm is commonly referred to as halftoning, and occurs in the system shown in Fig. 2 in the driver at halftoning step 52. Halftoning is described in Digital Halftoning, Robert Ulichney,
MIT Press, 1987.

It should be mentioned here that not all ink-jet printers are strictly binary. Some ink-jet printers can print more than two intensity levels per pixel. For example, some printers use multiple drop sizes that can be laid down on any given pixel. Another approach is to use combinations of droplets of uniform size, but with different dye loadings. Yet another approach is to use small droplets and to deposit multiple droplets at each pixel location to intentionally vary the size of the dot and/or its intensity for that location. For purposes of the present discussion, the more common binary ink-jet printer is described for simplicity. The invention is nevertheless applicable to ink-jet printers having more than two selectable intensity levels per pixel.

When the halftoning step 52 is complete, the image is represented in terms of the appropriate number of color planes, and for each color plane, each pixel has only the information of whether there is a dot printed or not. In other words, the near-analog color planes are now transformed into binary color planes, with only one bit of information per pixel per color. This single bit is either a dot on or a dot off.

The driver then communicates this rasterized binary pixel information to the printer controller 52. The controller 52 implements its print mode 54. The print mode does not alter the position of a dot or whether or not a dot is printed, but only affects when a particular dot is printed, *i.e*., during which pass of the printhead. Such decisions about when to print are commonly referred to as print masks. The term mask is used because the data coming from the driver already has determined where the dots will be placed, and this data is masked different passes to allow certain dots to be printed during the particular pass in question.

In the illustrated embodiment, the driver 42 is shown as being separate from the host, but is, as stated, typically software installed into the memory of the host. The controller 44 is typically implemented in firmware on a controller card in the printer. However, this separation between host, driver and controller may be altered. For example, both the driver and controller may be implemented in software held in the host memory. In this case, the printer would simply act upon very explicit scan-by-scan pixel instructions received from the host, since the functions of rasterization, color transform, halftoning and swath management would all be performed at the host level. This implementation is referred to as a "dumb printer." On the other extreme, both the driver and the controller may be implemented as software and/or firmware in the printer, with all functions of rasterization, color transform, halftoning and swath management being handled at the printer. In this embodiment, the host supplies the image data at a very height level (typically in a resolution-independent graphics language) to the printer. This implementation is referred to as a "smart printer."

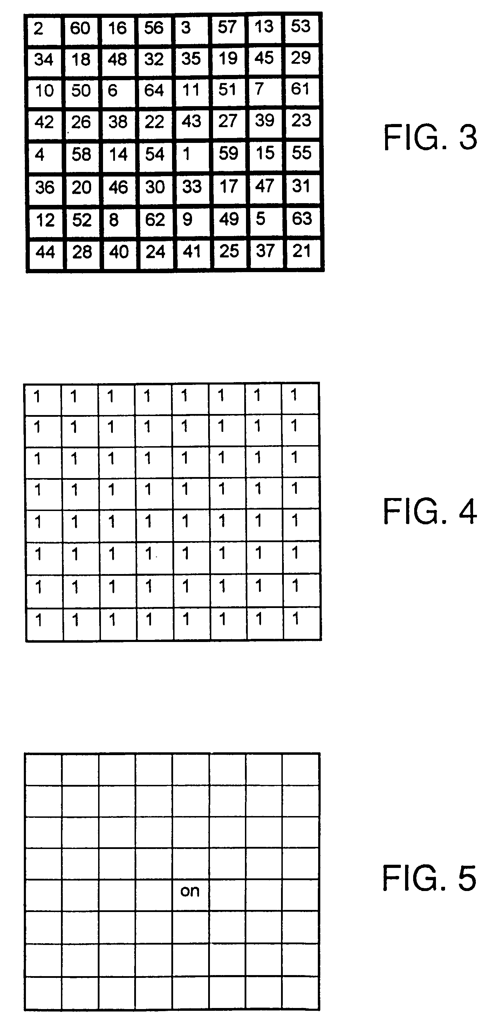

A common type of halftoning is ordered cell dithering, which is discussed in reference to Figs. 3-5. Fig. 3 is illustrates an 8 X 8 ordered dither cell. Each pixel location within this cell is assigned a threshold number between 1 and 64. These numbers are spread throughout the cell in a preselected fashion to achieve a certain desirable result during the printing process. The number 64 is chosen as the number of intensity levels represented because the cell has 64 locations (8 x 8 = 64). Such cells are typically square and typically have sides that are sized in multiples of eight pixels, such as 8, 16, 64 and 128. Square dither cells are sized in multiples of eight because data buses and memory are typically configured to handle eight-bit bytes.

Fig. 4 illustrates a portion of the logical rasterized image for a single color plane after having completed the rasterization 50 and color transform 48 steps. Only the upper left-hand 8 X 8 pixel segment of this image is shown for purposes of this discussion. However, it will be understood that an actual image would have many more pixel locations. For example, in a 7 X 10 inch image at 300 DPI would have 6.3 million pixel locations. The actual intensity levels for the area of the image shown in Fig. 4 is a uniform very low level (level 1) for the particular color represented. In other words, the near-analog intensity level for the image over the 8 X 8 pixel segment shown is a uniform intensity level 1. The actual intensity level for any given pixel in the image could be any level between 1 and 64. However, for simplicity a level I is chosen for the present illustration.

As stated, the intended printing device can only print two levels, on and off. Therefore, the uniform low intensity level must somehow be represented with the binary printing device. This is done by superposing the dither cell of Fig. 3 over the raster image. At each pixel, the threshold number in the dither cell is compared against intensity level in the raster image. If the raster image intensity level at that pixel location is greater than the threshold number at that location, a dot is printed, in other words, an "on" dot will be indicated. If the pixel intensity is less than the threshold number, no dot will be printed. The dither cell is first compared against the raster intensities in the upper left-most corner of the image, and is then repeatedly "tiled" over the entire image. The 8 X 8 dither cell shown in Fig. 3 would need to be tiled over 98,000 times over the 7 X 10 inch image referred to. The same process must be repeated for each of the colors used.

Fig. 5 illustrates the result of the dither cell of Fig. 3 having been tiled over the portion of the image shown in Fig. 4. In only one location, the 5th row and 5th column of the section of the image shown in Fig. 4 was the intensity (1) greater than or equal to the threshold number (also 1). As shown in Fig. 7, only in this location is an "on" bit provided. In other words, this is the only section of the image where a dot will be printed for the particular color considered. The result of the halftoning sequence shown in Figs. 3-5 is to produce a new set of color planes taking into account the binary nature of the intended printing device.

Figs. 6 and 7 illustrate the print mode disclosed in the Lin patent described above. This print method is intended to be used with non-porous print media, such as overhead transparencies. In Figs. 6 and 7, a printhead 60 is used to print the two patterns of dots shown. Printhead 60 has nozzles such as nozzle 62. These nozzles are shown from a view looking down at the paper, and would not be normally visible in this orientation, but are shown to illustrate their position during the scanning process of printhead 60. Printhead 60 is scanned to the right or to the left as shown in Figs. 6 and 7, which is the printhead scanning axis X shown in Fig. 1. As the printhead 60 is scanned across the page the nozzles are energized at the appropriate time by controller 14 to eject droplets of ink, as shown.

Fig. 6 illustrates a first pass of printhead 60 across the page. Fig. 7 illustrates a second pass of printhead 60 across the page. In Fig. 6, the dots currently printed in that pass are shown as solid black dots. In Fig. 7, the dots printed in the previous pass of Fig. 6 are shown as empty circles, and the dots printed in the current pass of Fig. 7 are shown as solid black dots. This same method is used to illustrate dots printed in current and prior passes is used also in Figs. 8-11, and 15-20.

In the first pass shown in Fig. 6, each nozzle prints only at every other dot location, as shown. The printhead has the capability of printing every dot location, but the interstitial dot positions are not printed upon to create the checkerboard pattern shown. After the pass of Fig. 6, the printhead makes the second pass of Fig. 7 over the same area. When the two passes of Figs. 6 and 7 are complete, a solid fill in of dots is printed. The paper is then advanced a full swath height, and the process begins again on a new swath.

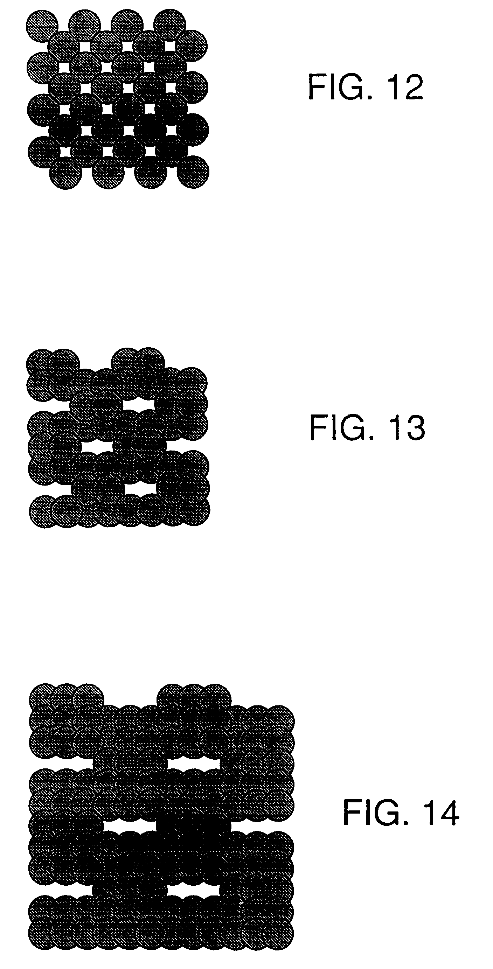

The dots shown in Figs. 6 and 7 (as well as Figs 8-11, and 15-20) are shown as if horizontally and vertically adjacent dots just touch, and as if diagonally adjacent dots do not touch. In reality, in most, if not all ink-jet printing systems, horizontally and adjacent dots overlap slightly, and diagonally adjacent dots are contiguous, as shown in Figs 12-14. This overlapping pattern allows for complete area fill of the desired image, without the white spaces that would result if horizontally and vertically adjacent dots just barely touched as shown in Figs. 6-11, and 15-20. These dots are shown this way for clarity in visualizing the dot patterns.

Figs. 8 and 9 illustrate the print mode disclosed in the Doan patent refereed to above. In Fig. 8, a first pass of the printhead 60 is made with a first bottom group 64 of nozzles. As shown in Fig. 8, during a first pass, a checkerboard pattern of 2 X 2 dot clusters is printed, leaving alternating positions of 2 X 2 dot cluster spaces empty. After the second pass in Fig. 8, the page is advanced a portion (typically one-half) of the effective printhead height to place a new group 66 of nozzles in position to retrace the swath portion shown in Fig. 9 and to place the first group 64 of nozzles over a portion of a second swath. A second pass is then made with the entire to printhead to deposit a complementary pattern of2 X 2 dot clusters, thus filling in the interstitial positions in the first swath and also printing the second pattern over a portion of a second swath.

The print medium is then again advanced one-half of the printhead height and the first pattern is again printed with the full printhead. On this third pass, the top half of the second swath is completed and the bottom half of the second swath is printed with the first pattern. Successive print medium advances and alternating first and second patterns are printed with the entire printhead to complete a series of contiguous swaths with the two print mode patterns being thus interleaved between print swaths. The following Table 2 illustrates this interleaving effect. In this table, the numbers represent the print pass, and the letters represent the two print patterns. The first pattern is labeled "A" and the second pattern is labeled "B."

**Table 2**

| **Print Passes** | **1** | **2** | **3** | **4** | **5** | **6** |
|---|---|---|---|---|---|---|
| Swath 1 | A | B | | | | |
| | | B | A | | | |
| Swath 2 | | | A | B | | |
| | | | | B | A | |
| Swath 3 | | | | | A | B |

As can be seen in Table 2, the two patterns A and B are interleaved between the successive print swaths. This interleaving or shingling helps conceal any banding that might occur due to errors in the medium advance mechanism. The first print swath is of necessity only a partial swath to begin the printing process at the top of a page or section of an image. As shown, once the steady state is achieved in the second swath, it takes two passes of the printhead to complete each full swath.

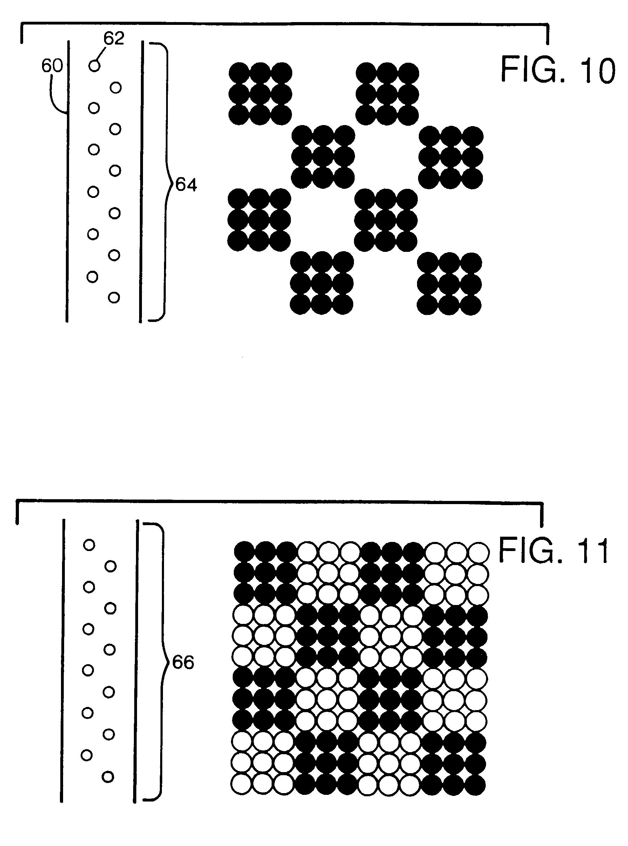

Figs. 10 and 11 illustrate a print mode according to a printing method ofthe present invention.. In Fig. 10, in a first pass, printhead 60 lays down an alternating pattern of 3 X 3 clusters, as shown. The lower portion 64 of printhead 60 is used to print the first pass. Fig. 11 illustrates a subsequent pass over the same section of paper printed by the upper portion 66 of printhead 60 so that a different set of nozzles is used. In this second pass, the 3 X 3 clusters that are complementary in position to the clusters printed in the first pass are printed in the interstitial positions left by the first pass. The print mode of Figs. 10 and 11 also uses the inteleaving of print mode patterns as discussed in reference to Figs. 8 and 9 and illustrated in Table 2 to print a series of successive print swaths. As can be seen, the alternating cluster pattern of Figs. 10 and 11 repeats every six dots in both the scanning and medium-advance direction. In other words, this print mode or pattern has a dot frequency of six dots in both these directions.

As stated, halftoning and dither cells, such as the dither cell shown in Fig. 3, commonly have a dot width of eight or a multiple of eight pixels. Thus, the divisor of the eight (or a multiple of eight) pixel width, and the pattern dot width shown in Figs. 10 and 11 is not an integer. However, the divisor of the standard dither cell dot width and the dot widths of the patterns shown in Figs. 6-9 is an integer, because each of these patterns repeat in both the scanning and medium-advance axes an integer number of times every 8 pixels. Therefore, these patterns would produce an integer divisor within an (N X 8) halftoning cell.

In ink-jet printers having resolutions of 300 DPI or better, errors in alignment can easily be as much as a dot row or more. In other words, mechanical defects can cause alignment in either the scan or medium-advance direction of as much as 1/300 of an inch or more. Fig. 12 illustrates what would happen if there were a one dot row alignment error in either the scanning or medium-advance directions in the print 5 mode of Figs. 6 and 7. As shown, such an error would cause the second print pass of Fig. 7 to address the exact same positions as print pass 4, causing the addressable positions of Fig. 7 to completely overlie those of the pattern shown in Fig. 6. This would reduce the intended area fill by approximately one-half, resulting in serious print quality degradation.

The result of a single dot row alignment error between the first and second print passes shown in Figs. 8 and 9 is illustrated in Fig. 13. In Fig. 13, the second print pass of Fig. 9 is shifted one dot row below the print pass of Fig. 8. In the 64 addressable positions in the 8 X 8 array shown, 16 of these positions are not covered with dots of ink, thus reducing the amount of area fill by one-fourth, and also causing a degradation in print quality.

Fig. 14 illustrates one of the benefits of the 3 X 3 dot cluster print mode illustrated in Figs. 10 and 11. A 12 X 12 array is shown to allow the illustration of two complete cycles of the print mode mask in both the scan and medium-advance axes. In Fig. 14, an alignment error between print passes of one dot row in the medium-advance direction is illustrated. As can be seen, out of the 144 addressable positions in the 12 X 12 array shown, 24 positions are not printed on with dots, thus reducing the area fill by one-sixth. This loss of area fill of one-sixth is significantly better than the loss of either one-half or one-fourth of the data of the prior print modes illustrated in Figs. 6-9.

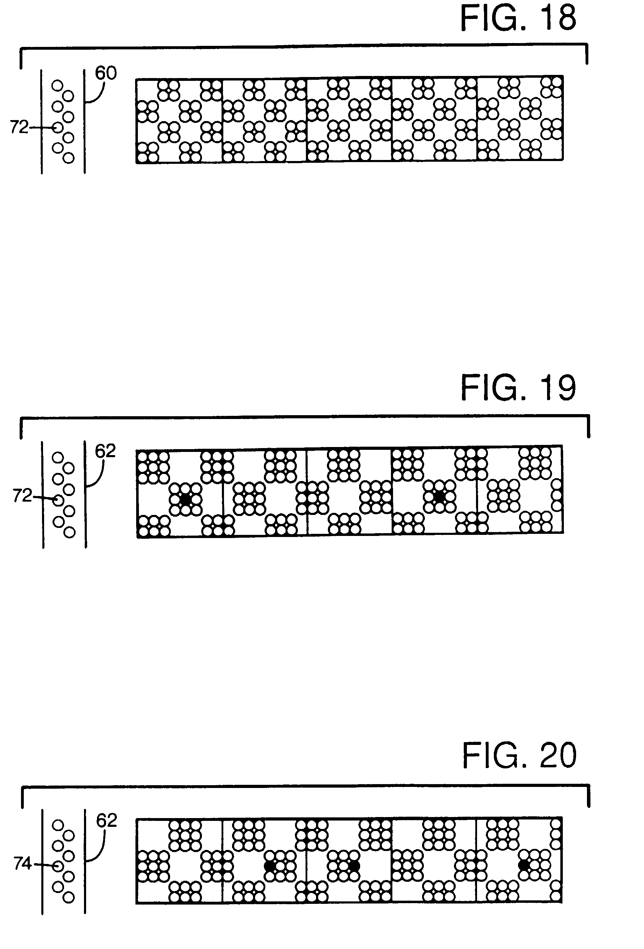

Another benefit of the illustrated print mode of Figs. 10 and 11 is illustrated in reference to Figs. 15-20. Figs. 15 and 16 illustrate first and second print passes according to the single dot checkerboard print mode shown in Figs. 6 and 7. Figs. 17 and 18 illustrate first and second passes according to the 2 X 2 dot cluster print mode illustrated in Figs. 8 and 9. Figs. 19 and 20 illustrate first and second print passes according to the two pass 3 X 3 dot cluster print mode illustrated in Figs. 10 and 11.

For simplicity, the image to be analyzed, which image is held within the host 40 as image data 46, is taken to be of a uniform intensity level 1 over the entire image area to be examined. The dither cell of Fig. 3 is tiled over this uniform intensity level area of the image to produce a series of resultant data cells, each of which is identical to the data cell of Fig. 5. In the case illustrated, only the 5th row, 5th column pixel cell in the dither cell shown in Fig. 3 will be produce an "on" dot (logical level 1) in the binary color plane by the driver, as shown in Fig 5. All other pixels will be assigned a dot "off" (logic level 0). Thus, as this dither cell is tiled over the image, only the pixel in the fifth row and fifth column will be printed in the printed image. Although only a single pixel is thus considered to be "on" for each dither cell, it will be understood that the principles described herein would apply to a greater number of pixels that might have an "on," for example, if the image had a greater average intensity over the section of image analyzed.

As shown in Fig. 15, as the single dot, two pass, checkerboard patterned print mode of Figs. 6 and 7 is applied to the data cells received, this fifth column, fifth row dot will always be printed in the first print pass, *i.e.,* the first print pass shown in Fig. 15. The second print pass shown in Fig. 16 will always skip over the 5th row, 5th column position.

Similarly in the two pass, 2 X 2 cluster print mode of Figs. 8 and 9, the fifth row, fifth column dot of each dither cell 70 will also be printed in the first pass, shown in Fig. 17. Again, in the second pass (shown in Fig. 18) this fifth column, fifth row dot will always be skipped. This same pattern of always printing this particular pixel, or any given pixel in a dither cell having a 8 X 8 pixel dot width (or any dot width with sides of the dither cell being a multiple of 8 pixels) will always be printed in either the first or the second pass, depending on the pixel location, for the print modes shown in Figs. 6-9. This is true because these print modes repeat an integer multiple of times every 8 pixels. Thus, their pattern dot widths may be said to "beat" with the dot width of the data cell.

The problem with such "beating" is that each dot shown in the first pass 15 or in the first pass 17, will also always be printed with the same nozzle, *i.e.,* nozzle 72 of printhead 60, as shown. In the second pass, nozzle 74 is in the correct vertical position to print these dots, but because of the print mode chosen, which beats with the same frequency as the data cell, this nozzle will skip over that particular pixel location every time.

If nozzle 72 were to for some reason malfunction, for example, due to being plugged with debris, or having ingested air, the fifth row, fifth column dot would never be printed. Thus, effectively eliminating completely the print data received from the driver for that pixel, and also eliminating much of the benefit of using a two-pass print mode. This problem occurs in any print mode having a pattern dot width that is an integer divisor of the dither cell or other data cell dot width received from the driver.

However, as shown in Figs. 19 and 20, the 3 X 3 dot cluster, two-pass print mode of Figs. 10 and 11 does not beat with the frequency of the 8 X 8 dither cell. The 3 X 3 dot cluster pattern repeats every 6 pixels. This non-beating of data cell and print mode pattern produces the beneficial result that the nozzle that prints the desired dots within a dither cell are somewhat randomized between the two print passes. As shown in Fig. 19, the fifth column, fifth row dot is printed in only two occasions in the first pass, whereas the other three fifth column, fifth row dots are printed three times in the second pass shown in Fig 20. Statistically, the fifth column, fifth row dot would be printed in approximately half the time in the first pass, and the other half of the time in the second pass. Thus, if nozzle 72 were to malfunction, from being plugged by dirt or debris, for example, the other nozzle 74 would pick up the duty of printing that dot during the second pass. Mathematically speaking, this beneficial result of dividing given dot locations within data cells between different nozzles is provided because the print pass pattern dot width is not an integer divisor of the data cell dot width received from the driver.

Other data cells other than the 8 X 8 or multiples of 8 X 8 cell dot width, and other print mode pattern dot widths other than the six dot pattern dot width shown in Figs. 10 and 11 could be used to provide the same benefit as long as the print mask pattern dot width is not an integer divisor of the data cell dot width. For example, with square data cells having eight pixels per side (or a multiple of eight pixels), dot patterns having a dot width of 10, 12, 14, or 18 dots might be used. Another way of mathematically expressing this desired non-beating effect is to say that the data cell dot width and the mask pattern dot width are not integer factors of each other, since the print mode pattern dot width may be in fact larger than the data cell dot width.

The term "dot width" as used herein means the number of dots or pixels used, and not to the actual physical size of the dots or pixels. The term "pattern dot width" means the number of dots per repetitive cycle of a given dot pattern. For example, a checkerboard 3 X 3 dot cluster pattern repeats every six dots, and would therefore have a pattern dot width of six. The term "dot frequency" when applied to the print mode pattern or the data cell means the number of dots per repetitive cycle. The "effective printhead height" means the height of the nozzle array used on a given printhead. When a driver or controller is said to be "programmed" to perform a given function or series of steps, it is intended to include any of various electronic methods of performing the recited functions or logical steps, such as with the use of software or firmware.

## Claims

1. A method of printing on a print medium (38) with a printhead (18, 20) according to image data (46) that has been segmented into data cells having a cell dot width. the method comprising:
depositing dots onto said medium (38) in a first pass of said printhead (18, 20) according to said image data (46) in a first pattern of dot clusters;
advancing said print medium (38) with respect to said printhead (18, 20); and
depositing dots onto said medium (38) in a second pass of said printhead (18, 20) according to said image data (46) in a second pattern of dot clusters interleaved with and complementary in position to said first pattern;
wherein said first and second patterns have a preselected pattern dot width and wherein said pattern dot width and said cell dot width are not integer factors of each other.

2. A method according to claim 1, wherein said pattern dot width is not an integer divisor of said cell dot width.

3. A method according to claim 1 or 2, wherein said cell dot width is N X 8, where N is an integer greater than 0.

4. A method according to any preceding claim, wherein each said first and second patterns have a pattern dot width of at least six dots.

5. A method according to any preceding claim, wherein each said first and second patterns are checkerboard patterns.

6. A method according to any preceding claim, wherein said data cells and dot clusters are square.

7. A method, according to any preceding claim, of printing on a print medium (38) with an ink-jet printhead (18, 20), the method comprising:
providing image data (46);
halftoning said image data (46) into data cells of a preselected cell dot width;
scanning said printhead (18. 20) and depositing a first pattern of dot clusters according to said image data (46) in a first pass of said printhead (18, 20);
advancing said print medium (38); and
scanning said printhead (18, 20) and depositing a second pattern of dot clusters according to said image data (46) in a second pass of said printhead (18, 20), said second pattern being interleaved with and complementary in position to said first pattern;
wherein said first and second patterns have a pattern dot width that is not an integer divisor of said cell dot width.

8. A method, according to any preceding claim, of printing on a print medium (38) with a scanning ink-jet printhead (18, 20) having an effective printhead height, the method comprising:
(a) depositing a first checkerboard pattern of 3 X 3 dot clusters according to said image data (46) in a first pass of said printhead (18, 20) across said medium (38);
(b) advancing said print medium (38) a portion of said effective printhead height; and
(c) depositing a second checkerboard pattern of 3 X 3 dot clusters according to said image data (46) in a second pass of said printhead (18, 20) across said medium (38), said second checkerboard pattern being interleaved with and complementary in position to said first checkerboard pattern.

9. A method according to claim 12, further comprising the step of: advancing said print medium (38) a portion of said swath height and repeating steps (a) through (c) to print a series of contiguous print swaths with interleaved first and second checkerboard patterns.

10. A printing system, according to any preceding claim, that prints on a print medium (38) based on image data (46) that has been halftoned into data cells of a preselected cell dot width, the system comprising:
a controller (44) communicatively linked to receive said halftoned image data;
a medium advance assembly (22, 30) communicatively linked to said controller (44);
a carriage scanning assembly (24, 34, 16) communicatively linked to said controller (44); and
a printhead (18, 20) coupled to said carriage scanning assembly (24, 34, 16) and communicatively linked to said controller (44);
said controller (44) being programmed to:
scan said printhead (18, 20) and deposit a first pattern of dot clusters according to said image data (46) in a first pass of said printhead (18, 20);
advance said print medium (38); and
scan said printhead (18, 20) and deposit a second pattern of dot clusters according to said image data (46) in a second pass of said printhead (18, 20), said second pattern being interleaved with and complementary in position to said first pattern;
wherein said first and second patterns have a pattern dot width that is not an integer divisor of said cell dot width.
